# EUROPÄISCHE PATENTSCHRIFT

(11) **EP 3 515 754 B1**
(45) Veröffentlichungstag und Bekanntmachung des Hinweises auf die Patenterteilung: **07.09.2022**
(21) Anmeldenummer: 17780034.9
(22) Anmeldetag: 20.09.2017
(51) Int. Cl.: B60N 2/02

(54) **EINSTELLVORRICHTUNG FÜR EINEN FAHRZEUGSITZ, SOWIE VERFAHREN ZUR MONTAGE EINER EINSTELLVORRICHTUNG**
ADJUSTING DEVICE FOR A VEHICLE SEAT, AND METHOD FOR ASSEMBLING AN ADJUSTING DEVICE
DISPOSITIF DE RÉGLAGE POUR UN SIÈGE DE VÉHICULE, AINSI QUE PROCÉDÉ POUR LE MONTAGE D'UN DISPOSITIF DE RÉGLAGE

(30) Priorität: 21.09.2016 DE 102016218065; 21.12.2016 DE 102016225835
(43) Veröffentlichungstag der Anmeldung: 31.07.2019
(73) Patentinhaber: KEIPER Seating Mechanisms Co., Ltd., Shanghai 201315 (CN)
(72) Erfinder: SCHUERMANN, Thorsten, 51519 Odenthal (DE); HOFFMANN, Andreas, 42489 Wuelfrath (DE); POCZIK, Tamas, 50733 Koeln (DE); STANIC, Ivica, 41542 Dormagen (DE); KUNTZ, Oliver, 42929 Wermelskirchen (DE)
(74) Vertreter: Liedtke & Partner Patentanwälte
(86) Internationale Anmeldenummer: PCT/EP2017/073790
(87) Internationale Veröffentlichungsnummer: WO 2018/054980

(56) Entgegenhaltungen:
- EP-A2- 1 972 488
- WO-A1-2014/033393
- DE-A1-102014 011 025
- FR-A1- 3 001 667

## Beschreibung

Die Erfindung betrifft eine Einstellvorrichtung für einen Fahrzeugsitz, mit einer ersten einstellbaren Baugruppe für ein erstes Schienenpaar, einer zweiten einstellbaren Baugruppe für ein zweites Schienenpaar und mit einem Elektromotor, wobei der Elektromotor mittels wenigstens einer Ausgangswelle sowohl mit einem Einstellgetriebe der ersten einstellbaren Baugruppe als auch mit einem Einstellgetriebe der zweiten einstellbaren Baugruppe wirkverbunden ist, wobei ein Motorträger vorgesehen ist, der den Elektromotor aufnimmt, wobei der Motorträger mittels jeweils eines Adapters an den beiden einstellbaren Baugruppen befestigt ist, und wobei der jeweilige Adapter mittels Befestigungsmitteln mit einem oberen Steg einer Sitzschiene des zugehörigen Schienenpaars verbunden ist und der Motorträger mittels Lagerbuchsen oder Fingern beidseitig an jeweils einem Adapter gelagert ist und wobei der Motorträger einstückig aus einem metallischen Werkstoff gefertigt ist, und die Adapter aus einem nichtmetallischen Werkstoff gefertigt sind.

Die Erfindung betrifft zudem ein Verfahren zur Montage einer Einstellvorrichtung.

### Stand der Technik

Die DE 10 2009 004 365 A1 offenbart eine Längseinstellvorrichtung für einen Fahrzeugsitz mit einem linken Schienenpaar, mit einem rechten Schienenpaar und mit einem Elektromotor, wobei jedes Schienenpaar eine Sitzschiene und eine Bodenschiene aufweist, jedem Schienenpaar ein Ausgangswelle zugeordnet ist, das eine Einstellbewegung der Sitzschiene relativ zur Bodenschiene ermöglicht. Der Elektromotor weist eine Ausgangswelle auf, die sowohl mit dem Einstellgetriebe des linken Schienenpaars als auch mit dem Einstellgetriebe des rechten Schienenpaars verbunden ist. Ein Motorträger ist mit der Sitzschiene des linken Schienenpaars und der Sitzschiene des rechten Schienenpaars verbunden. Der Motorträger nimmt den Elektromotor auf und bildet eine Führung für die Ausgangswelle des Elektromotors, wobei die Ausgangswelle parallel zu einer Längsrichtung des Motorträgers verläuft, und die Ausgangswelle auf einer Seite des Elektromotors mit dem Einstellgetriebe des linken Schienenpaars und auf der anderen Seite des Elektromotors mit dem Einstellgetriebe des rechten Schienenpaars verbunden ist.

Die DE 10 2007 060 882 B4 offenbart eine Einstellvorrichtung für einen Fahrzeugsitz, mit einer ersten einstellbaren Baugruppe, einer zweiten einstellbaren Baugruppe, und mit einem Elektromotor, wobei der Elektromotor mittels zweier Ausgangswellen sowohl mit einem Einstellgetriebe der ersten einstellbaren Baugruppe als auch mit einem Einstellgetriebe der zweiten einstellbaren Baugruppe wirkverbunden ist, wobei ein Motorträger vorgesehen ist, der den Elektromotor aufnimmt. Der Motorträger umfasst ein Rohr, an dessen Enden jeweils ein Verbundträger mit Befestigungsaufnahmen angeordnet ist, sowie einen Blechkörper zur Aufnahme des Elektromotors. Die Befestigungsaufnahmen sind mittels jeweils eines Adapters an den beiden einstellbaren Baugruppen befestigt.

Die FR 2 928 880 A1 offenbart eine Einstellvorrichtung für einen Fahrzeugsitz, mit einer ersten einstellbaren Baugruppe, einer zweiten einstellbaren Baugruppe, und mit einem Elektromotor, wobei der Elektromotor mittels zweier Ausgangswellen sowohl mit einem Einstellgetriebe der ersten einstellbaren Baugruppe als auch mit einem Einstellgetriebe der zweiten einstellbaren Baugruppe wirkverbunden ist, wobei ein Motorträger vorgesehen ist, der den Elektromotor aufnimmt. Der Motorträger ist einteilig aus Kunststoff hergestellt und weist an seinen beiden Enden jeweils einen einteilig in den Motorträger integrierten Adapter zur Befestigung des Motorträgers an den beiden einstellbaren Baugruppen auf. Einen derartigen Motorträger offenbart zudem die DE 10 2011 052 058 A1.

Die EP 1 972 488 A2 offenbart eine Einstellvorrichtung für einen Fahrzeugsitz, mit einer ersten einstellbaren Baugruppe, einer zweiten einstellbaren Baugruppe, und mit einem Elektromotor, wobei der Elektromotor mittels wenigstens einer Ausgangswelle sowohl mit einem Einstellgetriebe der ersten einstellbaren Baugruppe als auch mit einem Einstellgetriebe der zweiten einstellbaren Baugruppe wirkverbunden ist, wobei ein Motorträger vorgesehen ist, der den Elektromotor aufnimmt. Der Motorträger ist beidseitig an jeweils einem Getriebegehäuse und einer Oberschiene der beiden einstellbaren Baugruppen befestigt. Der Motorträger ist einstückig aus einem metallischen Werkstoff gefertigt. In dem Getriebegehäuse angeordnete Getriebebauteile können aus Kunststoff gefertigt sein.

Die FR 3 001 667 A1 offenbart eine Einstellvorrichtung für einen Fahrzeugsitz, mit einer ersten einstellbaren Baugruppe, einer zweiten einstellbaren Baugruppe, und mit einem Elektromotor, wobei der Elektromotor mittels wenigstens einer Ausgangswelle sowohl mit einem Einstellgetriebe der ersten einstellbaren Baugruppe als auch mit einem Einstellgetriebe der zweiten einstellbaren Baugruppe wirkverbunden ist, wobei ein Motorträger vorgesehen ist, der den Elektromotor aufnimmt. Der Motorträger weist beidseitig einen Zapfen und eine elastische Lasche auf, wobei die Zapfen jeweils in eine Öffnung einer Oberschiene der einstellbaren Baugruppen eingesteckt sind. Die elastischen Laschen sichern den Motorträger formschlüssig in einer Querrichtung an den einstellbaren Baugruppen.

### Aufgabe

Der Erfindung liegt die Aufgabe zu Grunde, eine Einstellvorrichtung, insbesondere eine Längseinstellvorrichtung, mit einem Motorträger der eingangs genannten Art zu verbessern. Insbesondere sollen die Schnittstellen des Motorträgers zu den Sitzschienen akustisch optimiert werden. Insbesondere soll eine Schwingungs-Entkopplung zwischen einem Elektromotor und den Sitzschienen erfolgen. Insbesondere soll zudem eine prüfbare und versandfähige Einheit eines Sitzschienenpaars bereitgestellt werden, wobei die Sitzschienenpaare mit dem Motorträger zu einer kompletten Einstellvorrichtung montiert werden können. Insbesondere soll eine Montage des Motorträgers an die Sitzschienen in Fahrzeugquerrichtung erfolgen können. Insbesondere soll eine Anbindung des Motorträgers an die Sitzschienen unabhängig von einer Verschraubung eines Getriebegehäuses eines Einstellgetriebes mit der Sitzschiene sein.

### Lösung

Diese Aufgabe wird erfindungsgemäß gelöst durch eine Einstellvorrichtung für einen Fahrzeugsitz, mit einer ersten einstellbaren Baugruppe für ein erstes Schienenpaar, einer zweiten einstellbaren Baugruppe für ein zweites Schienenpaar und mit einem Elektromotor, wobei der Elektromotor mittels wenigstens einer Ausgangswelle sowohl mit einem Einstellgetriebe der ersten einstellbaren Baugruppe als auch mit einem Einstellgetriebe der zweiten einstellbaren Baugruppe wirkverbunden ist, wobei ein Motorträger vorgesehen ist, der den Elektromotor aufnimmt, und der Motorträger mittels jeweils eines Adapters an den beiden einstellbaren Baugruppen befestigt ist, wobei der jeweilige Adapter mittels Befestigungsmitteln mit einem oberen Steg einer Sitzschiene des zugehörigen Schienenpaars verbunden ist und der Motorträger mittels Lagerbuchsen oder Fingern beidseitig an jeweils einem Adapter gelagert ist, und der Motorträger einstückig aus einem metallischen Werkstoff gefertigt ist, und die Adapter aus einem nichtmetallischen Werkstoff gefertigt sind.

Dadurch, dass der Motorträger einstückig aus einem metallischen Werkstoff gefertigt ist, und die Adapter aus einem nichtmetallischen Werkstoff gefertigt sind, sind die Schnittstellen des Motorträgers zu den Sitzschienen akustisch optimiert und es ist eine Schwingungs-Entkopplung zwischen dem Elektromotor und den Sitzschienen gegeben.

Die Adapter sind aus einem nichtmetallischen Werkstoff gefertigt. Dadurch lassen sich metallische Geräusche in der Schnittstelle zwischen dem Motorträger und den Adaptern reduzieren. Die Adapter können aus einem Kunststoff gefertigt sein. Der Motorträger kann mittels zweier Adapter an den beiden einstellbaren Baugruppen befestigt sein. Ein erster Adapter zur Befestigung des Mototrägers an der ersten Baugruppe kann aus einen anderen Werkstoff gefertigt sein als ein zweiter Adapter zur Befestigung des Mototrägers an der zweiten Baugruppe, insbesondere wenn die Belastung auf den Motorträger nicht symmetrisch verteilt ist.

Der Motorträger ist aus einem metallischen Werkstoff gefertigt, insbesondere aus Stahl. Dadurch kann der Motorträger eine hohe Steifigkeit und Festigkeit aufweisen. Mittels einer Befestigung des Motorträgers an nichtmetallischen Adaptern kann dennoch eine metallische Geräuschbildung vermieden werden.

Die erfindungsgemäße Einstellvorrichtung ist vorzugsweise als eine Längseinstellvorrichtung für einen Fahrzeugsitz ausgeführt. Die erfindungsgemäße Einstellvorrichtung kann aber auch in anderen Anwendungen eingesetzt werden, beispielsweise in Höheneinstellvorrichtungen für Fahrzeugsitze.

Die erste einstellbare Baugruppe kann ein Schienenpaar sein. Die zweite einstellbare Baugruppe kann ein Schienenpaar sein.

Wenigstens einer der Adapter kann wenigstens einen Stift zur Aufnahme des Motorträgers aufweisen. Vorzugsweise weist jeder der beiden Adapter genau zwei Stifte zur Aufnahme des Motorträgers auf. Die Stifte sind besonders bevorzugt in einer Querrichtung ausgerichtet. Dadurch lässt sich der Motorträger einfach in Querrichtung auf die Stifte aufschieben. Vorzugsweise weist der Motorträger entsprechende mit den Stiften der Adapter korrespondierende Öffnungen auf.

Der Motorträger kann wenigstens eine Öffnung zum Einsetzen einer Lagerbuchse aufweisen. Wenigstens eine in eine Öffnung des Motorträgers eingesetzte Lagerbuchse kann auf einen Stift eines Adapters aufgesteckt sein. Die Lagerbuchse ist vorzugsweise aus einem akustisch gut dämpfenden Werkstoff gefertigt. Die Lagerbuchse kann eine Gummitülle sein. Vorzugsweise ist jede Paarung aus einer Öffnung in dem Motorträger und einem Stift eines der Adapter mittels einer Lagerbuchse akustisch entkoppelt.

Der Motorträger kann wenigstens einen Finger aufweisen, der in eine Aufnahmeöffnung eines Adapters eingeschoben ist. Vorzugsweise weist der Motorträger zwei Endbereiche mit jeweils zwei Fingern auf. Die Finger sind vorzugsweise in Querrichtung in entsprechende Aufnahmeöffnungen der Adapter eingeschoben. Vorzugsweise entspricht die Anzahl der Finger der Anzahl der Aufnahmeöffnungen, so dass jeder Finger in genau eine zugeordnete Aufnahmeöffnung eingreift.

Eine Aufnahmeöffnung ist vorzugsweise komplementär zu dem zugeordneten Finger geformt. Der wenigstens eine Finger kann derart umgeformt sein, dass der wenigstens eine Finger in Querrichtung mittels einer Umformung formschlüssig in der Aufnahmeöffnung gehalten ist. Vorzugsweise weist der Finger wenigstens einen Rand auf, der nach dem Einschieben in die zugehörige Aufnahmeöffnung umgeformt ist, so dass ein in Querrichtung wirksamer Formschluss gegeben ist.

Die Aufgabe wird zudem gelöst durch ein Verfahren zur Montage einer erfindungsgemäßen Einstellvorrichtung, wobei zunächst die Adapter an den beiden einstellbaren Baugruppen befestigt werden, und in einem weiteren Verfahrensschritt der Motorträger mit den Adaptern verbunden wird. Bei einer Ausführung der Einstellvorrichtung als Längseinstellvorrichtung kann dadurch jedes Schienenpaar durch Montage eines Adapters zu einer funktionsfähigen und prüffähigen Montagegruppe montiert werden. Dadurch kann beispielsweise die Montage der Schienenpaare und die Überprüfung von deren Funktion in einem ersten Montagewerk erfolgen, und anschließend die Montage der einzelnen Schienenpaare zu einer Längseinstellvorrichtung in einem anderen Montagewerk erfolgen. Dies spart insbesondere Transportvolumen, da sich die Schienenpaare und die Motorträger einzeln sehr kompakt verpacken lassen, während eine fertig montierte Längseinstellvorrichtung vergleichsweise viel Transportvolumen aufgrund vieler ungefüllter Zwischenräume benötigt.

Zusammenfassend und mit anderen Worten beschrieben wird durch die Erfindung eine Einstellvorrichtung bereitgestellt, bei der zusammen mit einem Getriebegehäuse eines Einstellgetriebes ein nichtmetallischer Adapter an der Schiene montiert wird. Dieser Adapter dient zur Aufnahme des Motorträgers. Der Motorträger wird mittels einer Clipsgeometrie bzw. einer Umformung an dem Adapter fixiert und gesichert.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine perspektivische Darstellung einer aus dem Stand der Technik bekannten Einstellvorrichtung mit zwei Schienenpaaren, einem Elektromotor und einem Motorträger,
- Fig. 2:: eine Draufsicht auf einen aus dem Stand der Technik bekannten Motorträger,
- Fig. 3:: ausschnittsweise eine perspektivische Darstellung eines ersten Ausführungsbeispiels einer erfindungsgemäßen Einstellvorrichtung,
- Fig. 4a:: eine perspektivische Detailansicht auf das erste Ausführungsbeispiel aus Fig. 3 während eines Montageschritts,
- Fig. 4b:: eine perspektivische Detailansicht auf das erste Ausführungsbeispiel nach dem Montageschritt aus Fig. 4a,
- Fig. 4c:: eine perspektivische Detailansicht auf das erste Ausführungsbeispiel während eines weiteren Montageschritts,
- Fig. 4d:: eine perspektivische Detailansicht auf das erste Ausführungsbeispiel nach dem Montageschritt aus Fig. 4c,
- Fig. 5:: ausschnittsweise eine perspektivische Darstellung eines zweiten Ausführungsbeispiels einer erfindungsgemäßen Einstellvorrichtung,
- Fig. 6a:: eine perspektivische Detailansicht auf das zweite Ausführungsbeispiel aus Fig. 5 während eines Montageschritts,
- Fig. 6b:: eine perspektivische Detailansicht auf das zweite Ausführungsbeispiel nach dem Montageschritt aus Fig. 6a,
- Fig. 6c:: eine perspektivische Detailansicht auf das zweite Ausführungsbeispiel während eines weiteren Montageschritts,
- Fig. 6d:: eine perspektivische Detailansicht auf das zweite Ausführungsbeispiel nach dem Montageschritt aus Fig. 6c,
- Fig. 7:: eine weitere Detailansicht auf das zweite Ausführungsbeispiel aus einer gegenüber Fig. 5 unterschiedlichen Blickrichtung und während eines Montageschritts, der zeitlich zwischen den in den Figuren 6c und 6d gezeigten Montageschritten liegt, und
- Fig. 8:: eine Detailansicht auf das zweite Ausführungsbeispiel nach dem Montageschritt aus Fig. 7, wobei ein Fig. 6d entsprechender Montageschritt gezeigt ist.

Nachfolgend werden eine aus dem Stand der Technik bekannte als Längseinstellvorrichtung ausgeführte Einstellvorrichtung 10, ein aus dem Stand der Technik bekannter Motorträger 40, sowie zwei erfindungsgemäße als Längseinstellvorrichtungen ausgeführte Einstellvorrichtungen 100, 200 unter Verwendung von drei senkrecht zueinander verlaufenden Raumrichtungen beschrieben. Eine Längsrichtung x verläuft bei der im Fahrzeug eingebauten Einstellvorrichtung 10, 100, 200 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei der im Fahrzeug eingebauten Einstellvorrichtung 10, 100, 200 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines in einem die Einstellvorrichtung 10, 100, 200 aufweisenden Fahrzeugsitz sitzenden Insassen in normaler Sitzposition, wobei der Fahrzeugsitz im Fahrzeug eingebaut, in einer zur Personenbeförderung geeigneten Gebrauchsposition mit aufrecht stehender Sitzlehne und wie üblich in Fahrtrichtung ausgerichtet ist. Ein Fahrzeugsitz mit einer erfindungsgemäßen Einstellvorrichtung 100, 200 kann jedoch auch in abweichender Ausrichtung, beispielsweise quer zur Fahrtrichtung verbaut werden.

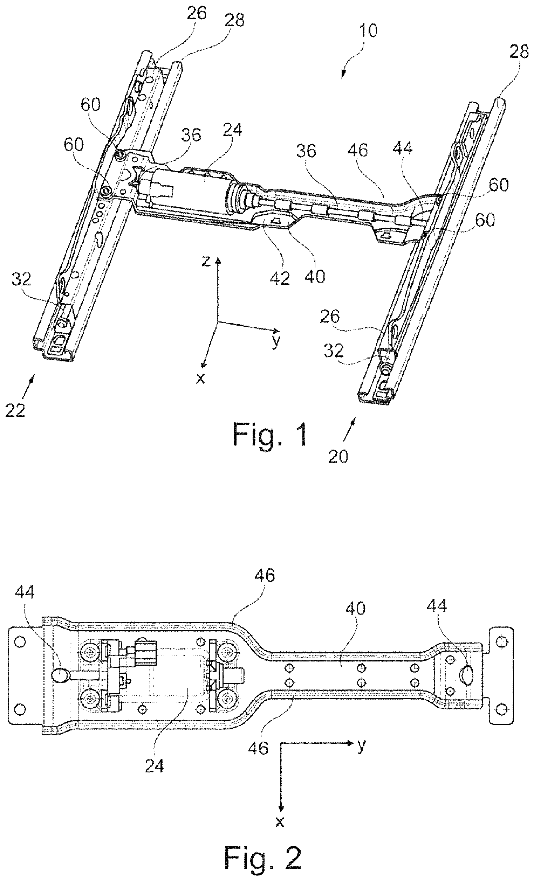

Figur 1 zeigt eine aus dem Stand der Technik bekannte als Längseinstellvorrichtung ausgeführte Einstellvorrichtung 10, deren grundsätzlicher Aufbau beispielsweise aus der DE 10 2009 004 365 A1 bekannt ist. Die Einstellvorrichtung 10 weist ein linkes Schienenpaar 20 und ein rechtes Schienenpaar 22 auf. Sie umfasst zudem einen Elektromotor 24, der zwischen diesen beiden Schienenpaaren 20, 22 angeordnet ist und sich im Wesentlichen in Querrichtung y erstreckt. Jedes Schienenpaar 20, 22 hat eine an einem Fahrzeugsitz befestigbare Sitzschiene 26 und eine an einer Fahrzeugstruktur befestigbare Bodenschiene 28. Die beiden Sitzschienen 26 sind in einer Richtung gegenüber den Bodenschienen 28 verschiebbar und tragen die restlichen Teile des Kraftfahrzeugsitzes. Vorliegend entspricht die Einstellrichtung der Längsrichtung x, jedoch kann die Einstellrichtung auch in einem beliebigen Winkel zur Längsrichtung x ausgerichtet sein. In jedem Schienenpaar 20, 22 ist ein Einstellgetriebe 32 untergebracht. Das Einstellgetriebe 32 ist jeweils innerhalb eines sich in Längsrichtung x erstreckenden und von den Schienenpaaren 20, 22 begrenzten, endseitig offenen Kanals untergebracht. Das Einstellgetriebe 32 weist jeweils eine drehfeste Spindel und eine mit dieser im Eingriff befindlichen Spindelmutter, die in einem in den Figuren nicht dargestellten Getriebegehäuse gelagert ist, wobei die Spindelmutter mittelbar von dem Elektromotor 24 antreibbar ist. Derartige Spindelgetriebe sind beispielsweise bekannt aus der US 2006/0260424 A1 und der US 4,802,374 A.

Der Elektromotor 24 hat eine Ausgangswelle 36. Als Ausgangswelle 36 ist die sich mit der Drehzahl des Elektromotors 24 drehende Welle sowie eine abschnittsweise die Welle ummantelnde Hülle zu verstehen. Die Ausgangswelle 36 erstreckt sich von dem Einstellgetriebe 32 des linken Schienenpaars 20 zum Einstellgetriebe 32 des rechten Schienenpaars 22 und verläuft im Wesentlichen gradlinig in Querrichtung y. Auch der Elektromotor 24 ist mit seinem zylindrischen Motorkörper in Querrichtung y ausgerichtet.

Zwischen den beiden Sitzschienen 26 ist ein Motorträger 40 angeordnet, der sich im Wesentlichen in Querrichtung y erstreckt. Der Motorträger 40 ist jeweils mittels zweier als Schrauben 60 ausgeführter Befestigungsmittel mit einem oberen Steg der jeweiligen Sitzschiene 26 verbunden. Die Schrauben 60 fixieren zudem das jeweilige Getriebegehäuse des Einstellgetriebes 32 in den Sitzschienen 26. Der Motorträger 40 ist in Nähe jedes Schienenpaares 20, 22 zweimal abgewinkelt. Eine Basis 42 des Motorträgers 40 ist in Vertikalrichtung z genau so tief gesetzt, dass die Ausgangswelle 36 in Höhe der Getriebegehäuse der Einstellgetriebe 32 angeordnet ist, also direkt in diese eingreifen kann.

Die Ausgangswelle 36 des Elektromotors 24 verläuft parallel zu einer Erstreckungsrichtung des Motorträgers 40. Diese Erstreckungsrichtung des Motorträgers 40 verläuft in Querrichtung y. In Querrichtung y hat der Motorträger 40 seine größte Ausdehnung. Der Motorträger 40 weist eine Befestigungsmöglichkeit für den Elektromotor 24 auf. Diese ist vorzugsweise wannenförmig. Der Motorträger 40 bildet eine Führung für die Ausgangswelle 36. Der Motorträger 40 ist einstückig hergestellt. Der Motorträger 40 ist aus einem Blechzuschnitt hergestellt. Der Blechzuschnitt wird entsprechend verformt, beispielsweise in einem Pressverfahren verformt. In einer Ausführung aus Kunststoff wird der Motorträger 40 vorzugsweise als Spritzgussteil in einer entsprechenden Form hergestellt.

Der Elektromotor 24 ist nicht mittig zwischen den beiden Schienenpaaren 20, 22 angeordnet, vielmehr ist er in unmittelbarer Nähe des rechten Schienenpaars 22 befestigt. Dadurch ist die Ausgangswelle 36 auf der rechten Sitzseite deutlich kürzer als auf der linken Sitzseite.

In den Endbereichen des Motorträgers 40, genauer zwischen den beiden zweifachen Abwinklungen, ist jeweils ein Durchlass 44 vorgesehen, der ein Fenster bildet. Durch jeweils einen dieser Durchlässe 44 ragt auf jeder Seite des Motorträgers 40 die Ausgangswelle 36 hindurch. Die Basis 42 verläuft im Wesentlichen, ausgenommen von der Wanne für die Aufnahme des Elektromotors 24, in Querrichtung y und parallel zur Ausgangswelle 36. Der Motorträger 40 hat in Längsrichtung x an jedem Längsrand einen Seitenrand 46, der nach oben, also im Wesentlichen in Vertikalrichtung z, hoch steht. Er ist einige Millimeter hoch und bildet eine Versteifung. Insgesamt bildet der Motorträger 40 eine Traverse, die die beiden Sitzseiten starr miteinander verbindet.

Figur 2 zeigt einen weiteren, aus dem Stand der Technik bekannten, Motorträger 40, der dem in Figur 1 dargestellten und zuvor beschriebenen Motorträger 40 weitgehend entspricht. Insbesondere trägt der Motorträger 40 einen Elektromotor 24, der über eine in Figur 2 nicht dargestellte Ausgangswelle 36, die durch die zwei Durchlässe 44 hindurch verläuft, jeweils ein Einstellgetriebe 32 eines Schienenpaars 20, 22 antreibt.

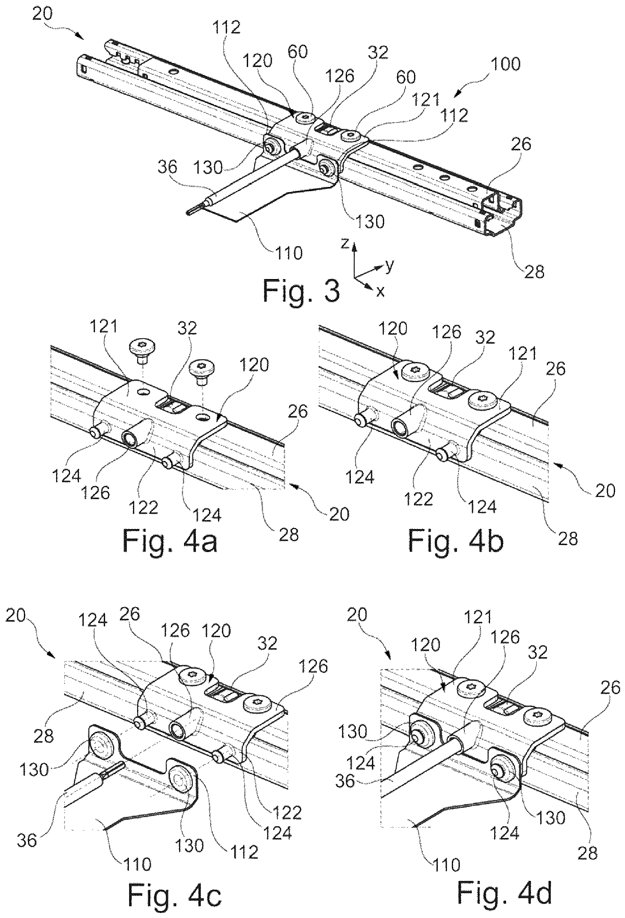

Figur 3 zeigt ausschnittsweise ein erstes Ausführungsbeispiel einer erfindungsgemäßen Einstellvorrichtung 100. Die Einstellvorrichtung 100 entspricht hinsichtlich Funktion und Aufbau weitgehend der zuvor beschriebenen, aus dem Stand der Technik bekannten Einstellvorrichtung 10. Insbesondere entsprechen die zwei Schienenpaare 20, 22 der erfindungsgemäßen Einstellvorrichtung 100, die jeweils eine Sitzschiene 26 und eine Bodenschiene 28 aufweisen, ein Elektromotor 24, eine Ausgangswelle 36, und jeweils ein Einstellgetriebe 32 hinsichtlich der jeweiligen Funktion und dem jeweiligen Grundaufbau dem Stand der Technik und werden daher nachfolgend nicht nochmals im Detail beschrieben.

Zwischen den beiden Sitzschienen 26 ist ein Motorträger 110 angeordnet, der sich im Wesentlichen in Längsrichtung x und in Querrichtung y erstreckt. In Querrichtung y hat der Motorträger 110 seine größte Ausdehnung. Der Motorträger 110 weist eine Befestigungsmöglichkeit für den Elektromotor 24 auf. Der Motorträger 110 bildet eine Führung für die Ausgangswelle 36.

Der Motorträger 110 weist, in Querrichtung y betrachtet, an seinen beiden Enden jeweils einen in Vertikalrichtung z nach oben abstehenden Flansch 112 auf. Der Flansch 112 verläuft zudem parallel zur Längsrichtung x. Der Flansch 112 weist zwei Öffnungen auf, in die jeweils eine Lagerbuchse 130, vorliegend eine Gummitülle, eingesetzt ist. Die beiden Lagerbuchsen 130 sind in Längsrichtung x hintereinander angeordnet. Zwischen den beiden Lagerbuchsen 130 ist der Flansch 112 nach unten gestuft ausgebildet, um ein Durchführen der Ausgangswelle 36 zu ermöglichen.

Der Motorträger 110 ist vorliegend einstückig hergestellt. Der Motorträger 110 ist aus einem Blechzuschnitt hergestellt. Der Blechzuschnitt wird entsprechend verformt, beispielsweise im Pressverfahren verformt.

Der Motorträger 110 ist mittels der Lagerbuchsen 130 beidseitig an jeweils einem Adapter 120 gelagert. Die beiden Adapter 120 sind jeweils mittels zweier als Schrauben 60 ausgeführter Befestigungsmittel mit einem oberen Steg der jeweiligen Sitzschiene 26 verbunden. Die Schrauben 60 fixieren zudem das jeweilige Getriebegehäuse des Einstellgetriebes 32 in der Sitzschiene 26. Die Adapter 120 sind vorliegend einteilig aus Kunststoff gefertigt.

Die beiden Adapter 120 sind spiegelsymmetrisch zueinander. Nachfolgend wird daher nur ein Adapter 120 näher beschrieben. Der Adapter 120 ist vorliegend ein Kunststoffbauteil. Der Adapter 120 weist einen ebenen Grundkörper 121 auf, der sich parallel zur Längsrichtung x und parallel zur Querrichtung y erstreckt. Der Grundkörper 121 liegt oben auf der Sitzschiene 26 auf. Der Grundkörper 121 weist zwei Durchgangslöcher für die Schrauben 60 auf. Vorliegend weist der Grundkörper 121 zudem eine Aussparung für das Getriebegehäuse des Einstellgetriebes 32 auf, das geringfügig aus einer Öffnung in der Sitzschiene 26 nach oben herausragt. In Querrichtung y und in Richtung des Motorträgers 110 schließt sich an den Grundkörper 121 ein zweifach nach unten abgewinkelter Aufnahmekörper 122 an. Ein vom Grundkörper 121 abgewandter Bereich des Aufnahmekörpers 122 verläuft senkrecht nach unten, das heißt parallel zur Vertikalrichtung z und parallel zur Längsrichtung x.

An dem Aufnahmekörper 122 des Adapters 120 sind zwei Stifte 124 angeordnet, vorliegend einteilig mit dem Aufnahmekörper 122 ausgebildet. Die Stifte 124 verlaufen parallel zur Querrichtung y. Die in dem Flansch 112 des Motorträgers 110 eingesetzten Lagerbuchsen 130 sind auf die Stifte 124 aufschiebbar, so dass der Motorträger 110 mittels der Stifte 124 an dem Adapter 120 lagerbar ist.

Der Aufnahmekörper 122 des Adapters 120 weist zudem eine hohlzylindrische Aufnahme 126 zur Lagerung der Hülle der Ausgangswelle 36 auf. Zudem richtet die Aufnahme 126 die Ausgangswelle 36 in Richtung des Getriebegehäuses des Einstellgetriebes 32 aus.

Die Figuren 4a bis 4d zeigen einzelne Montageschritte der Einstellvorrichtung 100. Die Figuren 4a, 4b zeigen die Montage des Adapters 120 an die Sitzschiene 26. Der Adapter 120 wird mittels der beiden Schrauben 60 mit der Sitzschiene 26 und dem in der Sitzschiene 26 angeordneten Getriebegehäuse des Einstellgetriebes 32 zu einer das Schienenpaar 20 umfassenden Montagegruppe verschraubt. Dadurch entsteht eine prüffähige und versandfähige Montagegruppe. Das Einstellgetriebe 32 der Montagegruppe ist bereits voll funktionsfähig und vor Montage des Motorträgers 110 prüffähig.

Die Figuren 4c, 4d zeigen nachgeschaltete Montageschritte, insbesondere in einem anderen Montagewerk. Dabei wird der Motorträger 110 mit dem an dem Motorträger 110 befestigten Elektromotor 24 und der Ausgangswelle 36 in Querrichtung y zunächst an einer ersten der beiden Sitzschienen 26 montiert. Dazu wird die Ausgangswelle 36 durch die Aufnahme 126 hindurch in das Getriebegehäuse eingeführt und die Lagerbuchsen 130 auf die Stifte 124 aufgeschoben. In analoger Weise erfolgt anschließend die Montage der zweiten Sitzschiene 26 an den Motorträger 110.

Die als Gummitüllen ausgebildeten Lagerbuchsen 130 dienen neben der Lagerung des Motorträgers 110 zur akustischen Entkopplung des Motorträgers 110 von den Adaptern 120 und damit von den Sitzschienen 26, und zur Dämpfung von Schwingungen. Ein Toleranzausgleich vom Schienenspurmaß zwischen den beiden Sitzschienen 26 wird über die Geometrie der Stifte 124 des Adapters 120 sichergestellt.

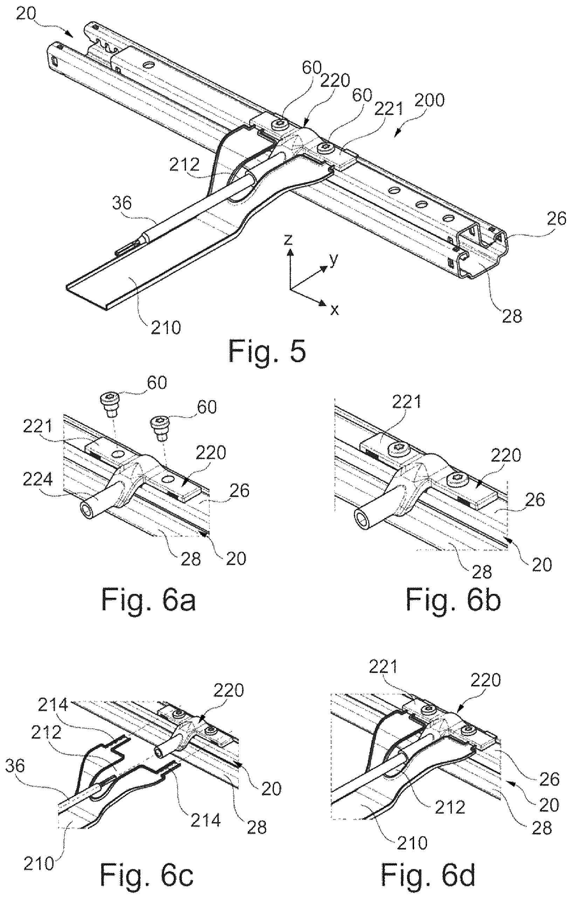

Figur 5 zeigt ausschnittsweise ein zweites Ausführungsbeispiel einer erfindungsgemäßen Einstellvorrichtung 200. Die als Längseinstellvorrichtung ausgeführte Einstellvorrichtung 200 entspricht hinsichtlich Funktion und Aufbau weitgehend der zuvor beschriebenen, aus dem Stand der Technik bekannten Einstellvorrichtung 10. Insbesondere entsprechen die zwei Schienenpaare 20, 22 der erfindungsgemäßen Einstellvorrichtung 200, die jeweils eine Sitzschiene 26 und eine Bodenschiene 28 aufweisen. Ein Elektromotor 24, eine Ausgangswelle 36, und jeweils ein Einstellgetriebe 32 entsprechen hinsichtlich der jeweiligen Funktion und dem jeweiligen Grundaufbau dem Stand der Technik und werden daher nachfolgend nicht nochmals im Detail beschrieben.

Zwischen den beiden Sitzschienen 26 ist ein Motorträger 210 angeordnet, der sich im Wesentlichen in Längsrichtung x und in Querrichtung y erstreckt. In Querrichtung y hat der Motorträger 210 seine größte Ausdehnung. Der Motorträger 210 weist eine Befestigungsmöglichkeit für den Elektromotor 24 auf. Der Motorträger 210 bildet eine Führung für die Ausgangswelle 36.

Der Motorträger 210 ist in seinen in Querrichtung y gegenüberliegenden beiden Endbereichen in der Nähe jedes Schienenpaares 20 zweimal abgewinkelt. In den beiden Endbereichen des Motorträgers 210, genauer im Bereich der beiden zweifachen Abwinklungen, ist jeweils ein Durchlass 212 vorgesehen, der die Endbereiche in jeweils zwei Hälften unterteilt. Durch jeweils einen dieser Durchlässe 212 ragt auf jeder Seite des Motorträgers 210 die Ausgangswelle 36 hindurch.

Der Motorträger 210 weist in beiden Endbereichen zwei Finger 214 auf, die in Querrichtung y nach außen abstehen. Vorliegend weisen jeweils beide Hälften der Endbereiche des Motorträgers 210 jeweils genau einen Finger 214 auf. Die beiden Finger 214 weisen jeweils an zwei parallel zur Querrichtung y verlaufenden Seiten einen nach oben abstehenden Rand 216 auf. Somit haben die Finger 214 einen U-förmig profilierten Querschnitt.

Der Motorträger 210 ist vorliegend einstückig hergestellt. Der Motorträger 210 ist aus einem Blechzuschnitt hergestellt. Der Blechzuschnitt wird entsprechend verformt, beispielsweise im Pressverfahren verformt. In einer Ausführung aus Kunststoff wird der Motorträger 210 vorzugsweise als Spritzgussteil in einer entsprechenden Form hergestellt.

Der Motorträger 210 ist mittels der Finger 214 beidseitig an jeweils einem Adapter 220 gelagert. Die beiden Adapter 220 sind jeweils mittels zweier als Schrauben 60 ausgeführter Befestigungsmittel mit einem oberen Steg der jeweiligen Sitzschiene 26 verbunden. Die Schrauben 60 fixieren zudem das jeweilige Getriebegehäuse des Einstellgetriebes 32 in der zugehörigen Sitzschiene 26. Die Adapter 220 sind vorliegend einteilig aus Kunststoff gefertigt.

Die beiden Adapter 220 sind spiegelsymmetrisch zueinander. Nachfolgend wird daher nur ein Adapter 220 näher beschrieben. Der Adapter 220 ist vorliegend ein Kunststoffbauteil. Der Adapter 220 weist einen abschnittsweise ebenen Grundkörper 221 auf, der sich parallel zur Längsrichtung x und parallel zur Querrichtung y erstreckt. Der Grundkörper 221 liegt oben auf den Sitzschiene 26 auf. Der Grundkörper 221 weist zwei Durchgangslöcher für die Schrauben 60 auf. Vorliegend weist der Grundkörper 221 zudem eine Wölbung 222 auf, unter der das Getriebegehäuse des Einstellgetriebes 32 angeordnet ist, das geringfügig aus einer Öffnung in der Sitzschiene 26 nach oben herausragt. Der Grundkörper 221 weist zwei Aufnahmeöffnungen 223 auf, die derart ausgebildet sind, dass die Finger 214 in die Aufnahmeöffnungen 223 in Querrichtung y einschiebbar sind. Die Aufnahmeöffnungen 223 sind komplementär zu den Fingern 214 geformt.

In Querrichtung y und in Richtung des Motorträgers 210 schließt sich an die Wölbung 222 eine hohlzylindrische Aufnahme 224 zur Lagerung der Ausgangswelle 36, insbesondere einer Hülle der Ausgangswelle 36 auf. Zudem richtet die Aufnahme 224 die Ausgangswelle 36 in Richtung des Getriebegehäuses des Einstellgetriebes 32 aus.

Die Figuren 6a bis 6d zeigen einzelne Montageschritte der Einstellvorrichtung 200. Die Figuren 6a, 6b zeigen die Montage des Adapters 220 an die Sitzschiene 26. Der Adapter 220 wird mittels der beiden Schrauben 60 mit der Sitzschiene 26 und dem in der Sitzschiene 26 angeordneten Getriebegehäuse des Einstellgetriebes 32 zu einer das Schienenpaar 20 umfassenden Montagegruppe verschraubt. Dadurch entsteht eine prüffähige und versandfähige Montagegruppe. Das Einstellgetriebe 32 der Montagegruppe ist bereits voll funktionsfähig und vor Montage des Motorträgers 210 prüffähig.

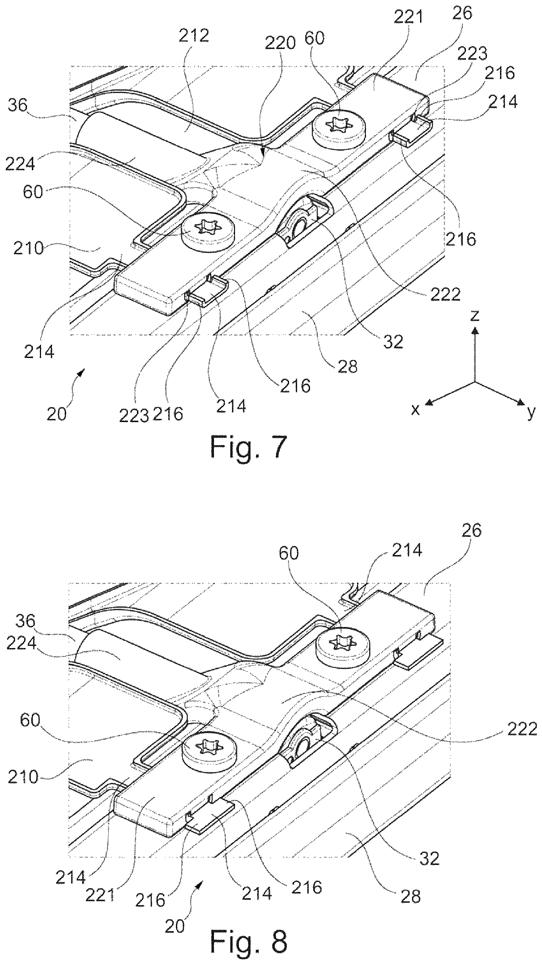

Die Figuren 6c, 6d zeigen nachgeschaltete Montageschritte, insbesondere in einem anderen Montagewerk. Dabei wird der Motorträger 210 mit dem an dem Motorträger 210 befestigten Elektromotor 24 und der Ausgangswelle 36 in Querrichtung y zunächst an eine der beiden Sitzschienen 26 montiert. Dazu wird die Ausgangswelle 36 durch die Aufnahme 224 hindurch in das Getriebegehäuse eingeführt und die Finger 214 in die Aufnahmeöffnungen 223 eingeschoben. Ein Teil der Finger 214 ragt dabei auf der dem Motorträger 210 abgewandten Seite des Adapters 220 aus dem Grundkörper 221 heraus. Der Rand 216 der Finger 214 ist derart eingeschnitten, dass die aus dem Grundkörper 221 herausragenden Abschnitte der Ränder 216, zur Fixierung der Finger 214 und damit des Motorträgers 210 in Querrichtung y, umgebogen werden können. Figur 7 zeigt die in die Aufnahmeöffnungen 223 des Adapters 220 eingesteckten Finger 214 des Motorträgers 210. Figur 8 zeigt die umgebogenen Abschnitte der Ränder 216. In analoger Weise erfolgt die Montage der zweiten Sitzschiene 26 an den Motorträger 210.

Die Lagerung des Motorträgers 210 mittels der Finger 214 in dem Adapter 220 dient zur akustischen Entkopplung des Motorträgers 210 von den Adaptern 220 und damit von den Sitzschienen 26, und zur Dämpfung von Schwingungen. Ein Toleranzausgleich vom Schienenspurmaß zwischen den beiden Sitzschienen 26 wird über die Geometrie, insbesondere die Länge der Finger 214 sichergestellt.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 10: Einstellvorrichtung
- 20: Schienenpaar
- 22: Schienenpaar
- 24: Elektromotor
- 26: Sitzschiene
- 28: Bodenschiene
- 32: Einstellgetriebe
- 36: Ausgangswelle
- 40: Motorträger
- 42: Basis
- 44: Durchlass
- 46: Seitenrand
- 60: Schraube

- 100: Einstellvorrichtung
- 110: Motorträger
- 112: Flansch
- 120: Adapter
- 121: Grundkörper
- 122: Aufnahmekörper
- 124: Stift
- 126: Aufnahme
- 130: Lagerbuchse

- 200: Einstellvorrichtung
- 210: Motorträger
- 212: Durchlass
- 214: Finger
- 216: Rand
- 220: Adapter
- 221: Grundkörper
- 222: Wölbung
- 223: Aufnahmeöffnung
- 224: Aufnahme

- x: Längsrichtung
- y: Querrichtung
- z: Vertikalrichtung

## Patentansprüche

1. Einstellvorrichtung (100, 200) für einen Fahrzeugsitz, mit einer ersten einstellbaren Baugruppe (20) für ein erstes Schienenpaar, einer zweiten einstellbaren Baugruppe (22) für ein zweites Schienenpaar und mit einem Elektromotor (24), wobei der Elektromotor (24) mittels wenigstens einer Ausgangswelle (36) sowohl mit einem Einstellgetriebe (32) der ersten einstellbaren Baugruppe (20) als auch mit einem Einstellgetriebe (32) der zweiten einstellbaren Baugruppe (22) wirkverbunden ist, wobei ein Motorträger (110, 210) vorgesehen ist, der den Elektromotor (24) aufnimmt, wobei der Motorträger (110, 210) mittels jeweils eines Adapters (120, 220) an den beiden einstellbaren Baugruppen (20, 22) befestigt ist, und **dadurch gekennzeichnet, dass** der jeweilige Adapter (120, 220) mittels Befestigungsmitteln mit einem oberen Steg einer Sitzschiene (26) des zugehörigen Schienenpaars (20, 22) verbunden ist und der Motorträger (110, 210) mittels Lagerbuchsen (130) oder Fingern (214) beidseitig an jeweils einem Adapter (120, 220) gelagert ist und wobei der Motorträger (110, 210) einstückig aus einem metallischen Werkstoff gefertigt ist, und die Adapter (120, 220) aus einem nichtmetallischen Werkstoff gefertigt sind.

2. Einstellvorrichtung (100) nach Anspruch 1, **dadurch gekennzeichnet, dass** der Motorträger (110, 210) aus Stahl, insbesondere Stahlblech, gefertigt ist.

3. Einstellvorrichtung (100) nach Anspruch 1 oder 2, **dadurch gekennzeichnet, dass** die Adapter (120, 220) aus einem Kunststoff gefertigt sind.

4. Einstellvorrichtung (100) nach einem der Ansprüche 1 bis 3, **dadurch gekennzeichnet, dass** wenigstens einer der Adapter (120) wenigstens einen Stift (124) zur Aufnahme des Motorträgers (110) aufweist.

5. Einstellvorrichtung (100) nach Anspruch 4, **dadurch gekennzeichnet, dass** der wenigstens eine Stift (124) in einer Querrichtung (y) ausgerichtet ist.

6. Einstellvorrichtung (100) nach Anspruch 5, **dadurch gekennzeichnet, dass** der Motorträger (110) wenigstens eine in eine Öffnung des Motorträgers (110) eingesetzte Lagerbuchse (130) aufweist, und die Lagerbuchse (130) auf den wenigstens einen Stift (124) aufgesteckt ist.

7. Einstellvorrichtung (100) nach Anspruch 6, **dadurch gekennzeichnet, dass** die Lagerbuchse (130) eine Gummitülle ist.

8. Einstellvorrichtung (200) nach einem der Ansprüche 1 bis 3, **dadurch gekennzeichnet, dass** der Motorträger (210) wenigstens einen Finger (214) aufweist, der in eine Aufnahmeöffnung (223) wenigstens eines Adapters (220), insbesondere in Querrichtung (y), eingeschoben ist.

9. Einstellvorrichtung (100) nach Anspruch 8, **dadurch gekennzeichnet, dass** der wenigstens eine Finger (214) in Querrichtung (y) in die Aufnahmeöffnung (223) eingeschoben ist.

10. Einstellvorrichtung (200) nach Anspruch 8 oder 9, **dadurch gekennzeichnet, dass** die Aufnahmeöffnung (223) komplementär zu dem wenigstens einen Finger (214) geformt ist.

11. Einstellvorrichtung (200) nach einem der Ansprüche 8 bis 10, **dadurch gekennzeichnet, dass** der wenigstens eine Finger (214) derart umgeformt ist, dass der wenigstens eine Finger (214) mittels eines nach einer Montage des Motorträgers (210) an die Adapter (220) umgeformten Bereichs in Querrichtung (y) formschlüssig in der Aufnahmeöffnung (223) gehalten ist.

12. Einstellvorrichtung (100) nach Anspruch 11, **dadurch gekennzeichnet, dass** der umgeformte Bereich ein Rand (216) des Fingers (214) ist.

13. Einstellvorrichtung (100, 200) nach einem der Ansprüche 1 bis 12, **dadurch gekennzeichnet, dass** die Einstellvorrichtung (100, 200) eine Längseinstellvorrichtung ist.

14. Einstellvorrichtung (100, 200) nach einem der Ansprüche 1 bis 12, **dadurch gekennzeichnet, dass** die Einstellvorrichtung (100, 200) eine Höheneinstellvorrichtung ist.

15. Verfahren zur Montage einer Einstellvorrichtung (100, 200) nach einem der Ansprüche 1 bis 14, **dadurch gekennzeichnet, dass** zunächst die Adapter (120, 220) an der jeweils zugeordneten einstellbaren Baugruppe (20, 22) befestigt werden, und in einem weiteren Verfahrensschritt der Motorträger (110, 210) mit den Adaptern (120, 220) verbunden wird.

## Claims

1. Adjusting device (100, 200) for a vehicle seat, comprising a first adjustable assembly (20) for a first pair of rails, a second adjustable assembly (22) for a second pair of rails, and comprising an electric motor (24), wherein the electric motor (24) is operatively connected both to an adjusting gearing (32) of the first adjustable assembly (20) and to an adjusting gearing (32) of the second adjustable assembly (22) by at least one output shaft (36), wherein a motor carrier (110, 210) is provided which receives the electric motor (24), wherein
the motor carrier (110, 210) is fastened to each of the two adjustable assemblies (20, 22) by an adapter (120, 220), and
**characterized in that**
the respective adapter (120, 220) is connected to an upper web of a seat rail (26) of the associated pair of rails (20, 22) by fastening means and the motor carrier (110, 210) is mounted on both sides on a respective adapter (120, 220) by bearing bushings (130) or fingers (214), and wherein the motor carrier (110, 210) is manufactured integrally from a metallic material, and the adapters (120, 220) are manufactured from a non-metallic material.

2. Adjusting device (100) according to Claim 1, **characterized in that** the motor carrier (110, 210) is manufactured from steel, in particular steel plate.

3. Adjusting device (100) according to Claim 1 or 2, **characterized in that** the adapters (120, 220) are manufactured from a plastic.

4. Adjusting device (100) according to one of Claims 1 to 3, **characterized in that** at least one of the adapters (120) has at least one pin (124) for receiving the motor carrier (110).

5. Adjusting device (100) according to Claim 4, **characterized in that** the at least one pin (124) is oriented in a transverse direction (y).

6. Adjusting device (100) according to Claim 5, **characterized in that** the motor carrier (110) has at least one bearing bushing (130) which is inserted into an opening in the motor carrier (110), and the bearing bushing (130) is plugged onto the at least one pin (124).

7. Adjusting device (100) according to Claim 6, **characterized in that** the bearing bushing (130) is a rubber grommet.

8. Adjusting device (200) according to one of Claims 1 to 3, **characterized in that** the motor carrier (210) has at least one finger (214) which is pushed, in particular in the transverse direction (y), into a receiving opening (223) in at least one adapter (220) .

9. Adjusting device (100) according to Claim 8, **characterized in that** the at least one finger (214) is pushed in the transverse direction (y) into the receiving opening (223).

10. Adjusting device (200) according to Claim 8 or 9, **characterized in that** the receiving opening (223) is shaped in a complementary manner to the at least one finger (214).

11. Adjusting device (200) according to one of Claims 8 to 10, **characterized in that** the at least one finger (214) is deformed in such a manner that the at least one finger (214) is held in a form-fitting manner in the transverse direction (y) in the receiving opening (223) by a region which is deformed after the motor carrier (210) is mounted onto the adapters (220).

12. Adjusting device (100) according to Claim 11, **characterized in that** the deformed region is an edge (216) of the finger (214).

13. Adjusting device (100, 200) according to one of Claims 1 to 12, **characterized in that** the adjusting device (100, 200) is a longitudinal adjusting device.

14. Adjusting device (100, 200) according to one of Claims 1 to 12, **characterized in that** the adjusting device (100, 200) is a height adjusting device.

15. Method for assembling an adjusting device (100, 200) according to one of Claims 1 to 14, **characterized in that** first of all the adapters (120, 220) are fastened to the respectively assigned adjustable assembly (20, 22), and, in a further method step, the motor carrier (110, 210) is connected to the adapters (120, 220).

## Revendications

1. Dispositif de réglage (100, 200) destiné à un siège de véhicule, ledit dispositif de réglage comprenant un premier ensemble réglable (20) destiné à une première paire de rails, un deuxième ensemble réglable (22) destiné à une deuxième paire de rails et un moteur électrique (24), le moteur électrique (24) étant relié fonctionnellement au moyen d'au moins un arbre de sortie (36) aussi bien à une transmission de réglage (32) du premier ensemble réglable (20) qu'à une transmission de réglage (32) du deuxième ensemble réglable (22), un support de moteur (110, 210) étant prévu qui reçoit le moteur électrique (24), le support de moteur (110, 210) étant fixé à chacun des deux ensembles réglables (20, 22) au moyen d'un adaptateur respectif (120, 220), et
**caractérisé en ce que**
l'adaptateur respectif (120, 220) est relié à une nervure supérieure d'un rail de siège (26) de la paire de rails associée (20, 22) à l'aide de moyens de fixation et le support de moteur (110, 210) est monté des deux côtés sur un adaptateur respectif (120, 220) au moyen de coussinets (130) ou de doigts (214) et
le support de moteur (110, 210) est réalisé d'une seule pièce à partir d'une matière métallique, et les adaptateurs (120, 220) sont réalisés à partir d'une matière non métallique.

2. Dispositif de réglage (100) selon la revendication 1, **caractérisé en ce que** le support de moteur (110, 210) est réalisé en acier, notamment en tôle d'acier.

3. Dispositif de réglage (100) selon la revendication 1 ou 2, **caractérisé en ce que** les adaptateurs (120, 220) sont réalisés en une matière synthétique.

4. Dispositif de réglage (100) selon l'une des revendications 1 à 3, **caractérisé en ce qu'**au moins un des adaptateurs (120) comporte au moins une tige (124) destinée à recevoir le support de moteur (110).

5. Dispositif de réglage (100) selon la revendication 4, **caractérisé en ce que** l'au moins une tige (124) est orientée dans une direction transversale (y).

6. Dispositif de réglage (100) selon la revendication 5, **caractérisé en ce que** le support de moteur (110) comporte au moins un coussinet (130) inséré dans une ouverture du support de moteur (110), et le coussinet (130) est fixé sur l'au moins une tige (124).

7. Dispositif de réglage (100) selon la revendication 6, **caractérisé en ce que** le coussinet (130) est une douille en caoutchouc.

8. Dispositif de réglage (200) selon l'une des revendications 1 à 3, **caractérisé en ce que** le support de moteur (210) comporte au moins un doigt (214) qui est inséré dans une ouverture de réception (223) d'au moins un adaptateur (220), notamment dans la direction transversale (y).

9. Dispositif de réglage (100) selon la revendication 8, **caractérisé en ce que** l'au moins un doigt (214) est enfoncé dans l'ouverture de réception (223) dans la direction transversale (y).

10. Dispositif de réglage (200) selon la revendication 8 ou 9, **caractérisé en ce que** l'ouverture de réception (223) a une forme complémentaire de l'au moins un doigt (214).

11. Dispositif de réglage (200) selon l'une des revendications 8 à 10, **caractérisé en ce que** l'au moins un doigt (214) est déformé de manière à maintenir l'au moins un doigt (214) par complémentarité de formes dans l'ouverture de réception (223) dans la direction transversale (y) au moyen d'une zone déformée après montage du support de moteur (210) sur l'adaptateur (220).

12. Dispositif de réglage (100) selon la revendication 11, **caractérisé en ce que** la zone déformée est un bord (216) du doigt (214).

13. Dispositif de réglage (100, 200) selon l'une des revendications 1 à 12, **caractérisé en ce que** le dispositif de réglage (100, 200) est un dispositif de réglage longitudinal.

14. Dispositif de réglage (100, 200) selon l'une des revendications 1 à 12, **caractérisé en ce que** le dispositif de réglage (100, 200) est un dispositif de réglage en hauteur.

15. Procédé de montage d'un dispositif de réglage (100, 200) selon l'une des revendications 1 à 14, **caractérisé en ce que** les adaptateurs (120, 220) sont d'abord fixés à l'ensemble réglable (20, 22) respectivement associé et, dans une autre étape de procédé, le support de moteur (110, 210) est relié aux adaptateurs (120, 220).
